# EUROPÄISCHE PATENTSCHRIFT

(11) **EP 0 831 575 B1**
(45) Veröffentlichungstag und Bekanntmachung des Hinweises auf die Patenterteilung: **03.01.2001**
(21) Anmeldenummer: 97810604.5
(22) Anmeldetag: 27.08.1997
(51) Int. Cl.: H02K 15/12

(54) **Verfahren zur Herstellung eines vorzugsweise als Roebelstab ausgebildeten Leiterstabs und Vorrichtung zur Durchführung dieses Verfahrens**
Method and apparatus for manufacturing conductive bars arranged preferably in the form of roebel bars
Procédé et dispositif de fabrication de barres conductrices réalisées de préférence sous la forme des barreaux roebel

(30) Priorität: 18.09.1996 DE 19637983
(43) Veröffentlichungstag der Anmeldung: 25.03.1998
(73) Patentinhaber: MICAFIL Vakuumtechnik AG, CH-8048 Zürich (CH)
(72) Erfinder: Gmeiner, Paul, 8966 Lieli (CH)
(74) Vertreter: Kaiser, Helmut

(56) Entgegenhaltungen:
- WO-A-91/07764
- PATENT ABSTRACTS OF JAPAN vol. 010, no. 248 (E-431), 26.August 1986 & JP 61 076048 A (MEIDENSHA ELECTRIC MFG CO LTD), 18.April 1986,
- PATENT ABSTRACTS OF JAPAN vol. 007, no. 148 (E-184), 29.Juni 1983 & JP 58 058857 A (SHINKO DENKI KK), 7.April 1983,

## Beschreibung

### TECHNISCHES GEBIET

Bei der Erfindung wird ausgegangen von einem Verfahren zur Herstellung eines vorzugsweise als Roebelstab ausgebildeten Leiterstabs der Wicklung einer elektrischen Maschine nach dem Oberbegriff von Patentanspruch 1. Die Erfindung betrifft auch eine Vorrichtung zur Durchführung des Verfahrens.

Die Wicklungen elektrischer Maschinen, in denen die Abmessungen der Wicklungen eine vorgegebene Grösse überschreiten, sind im allgemeinen aus Leiterstäben aufgebaut. Jeder Stab weist einen gerade ausgeführten und in einer Nut der Maschine gehaltenen Mittelabschnitt auf sowie zwei sich daran anschliessende, gekrümmt ausgebildete Endabschnitte, die zum Wickelkopf der Wicklung gehören. Die Fertigung eines solchen Leiterstabs ist relativ aufwendig und umfasst das Verdrillen von nebeneinanderliegenden Reihen von flachen Teilleitern zumindest über die gesamte Länge der Nut und das Aufbringen einer Hauptisolation auf die miteinander verdrillten Teilleiter. Zum Aufbringen der Hauptisolation werden zunächst die verdrillten Teilleiter mit Isolierband bewickelt. Der bewickelte Leiterstab wird mit einem härtbaren Imprägniermittel getränkt. Unter Bildung der Hauptisolation wird der imprägnierte Leiterstab schliesslich in einer Form ausgehärtet.

### STAND DER TECHNIK

Verfahren der eingangs genannten Art sind in H.Sequenz "Herstellung der Wicklungen elektrischer Maschinen", Springer-Verlag 1973, insbesondere S.150 - 154, beschrieben. Bei einem dieser Verfahren wird ein aus verdrillten Teilleitern bestehender, unbewickelter Leiterstab mit einem Glimmerband bewickelt. Der bewickelte Leiterstab wird sodann in einem Ofen getrocknet und entgast und anschliessend in einer druckfesten Wanne unter Vakuum mit einem vorgewärmten und entgasten Tränkharz imprägniert. Zur Verbesserung der Imprägnierung werden der Leiterstab und das Tränkharz unter Druck gesetzt. Der imprägnierte Leiterstab wird sodann vorsichtig aus der Tränkwanne entfernt, nach Bewickeln mit Trennfolie in einer Presse in seine endgültige Form gebracht und bei erhöhten Temperaturen ausgehärtet.

Bei einem alternativen Verfahren wird der getrocknete Leiterstab in eine vakuum- und druckfeste Form gebracht und bereits in der Form unter Vakuum und nachfolgend unter Druck mit dem Tränkharz imprägniert. Der solchermassen geformte und imprägnierte Leiterstab wird anschliessend in der Form ausgehärtet. Da der getrocknete Leiterstab beim Einbringen in die Form gepresst wird und da zudem der Leiterstab oft eine ganz erhebliche Länge aufweist, bedarf es häufig einer langen Zeitdauer, um den formgepressten, getrockneten Leiterstab ausreichend zu evakuieren und zu entgasen.

### KURZE DARSTELLUNG DER ERFINDUNG

Der Erfindung, wie sie in den Patentansprüchen angegeben ist, liegt die Aufgabe zugrunde, das Verfahren der eingangs genannten Art derart weiterzubilden, dass es in einfacher und wirtschaftlicher Weise ausgeführt werden kann und Leiterstäbe mit gleichmässig guten dielektrischen Eugenschaften liefert, sowie eine Vorrichtung anzugeben, die zu eine besonders vorteilhaften Ausführung des Verfahrens geeignet ist.

Mit dem erfindungsgemässen Verfahren können in kurzer Zeit und mit geringem verfahrenstechnischem Aufwand Leiterstäbe mit hervorragenden dielektrischen Eigenschaften hergestellt werden. Dies vor allem deswegen, da die Form beim Vorwärmen, Evakuieren, Trocknen und Imprägnieren des Leiterstabs eine grosse Öffnung aufweist, so dass im Leiterstab oder im Imprägniermittel vorhandene schädliche Gase und Dämpfe äusserst schnell und nahezu vollständig aus dem Forminneren entfernt werden können. Im allgemeinen entfällt sogar das sonst obligatorische Vortrocknen in einem Ofen. Von besonderem Vorteil ist es hierbei, dass auch durch das Imprägniermittel verdrängte Restfeuchtigkeit und Restgase während des Imprägnierens rasch aus der geöffeten Form entfernt werden können. Hierdurch werden porenfreie Isolierungen und damit dielektrisch besonders hochwertige Leiterstäbe erreicht.

Zugleich ist sichergestellt, dass lediglich ein minimales Volumen an Imprägniermittel benötigt wird, und dass das Imprägniermittel rasch erneuert wird. Da nur geringe Mengen an Imprägniermittel eingesetzt werden, benötigt das erfindungsgemässe Verfahren bei seiner Durchführung zudem relativ wenig Energie. Wegen der raschen Erneuerung des Imprägniermittels ist die thermische Belastung des Imprägniermittels gering und sind weder ein vorzeitiges Härten des Imprägniermittels noch ein übermässiger Ausschuss an dielektrisch unzureichend bemessenenen Leiterstäben zu befürchten.

Da der Leiterstab nach dem Füllen während des Imprägnierens und Aushärtens durch das Imprägniermittel ständig unter Druck gesetzt wird, entfallen sonst übliche Stickstoff- oder Druckluftaufbereitungsanlagen und wird wegen des anhaltenden Imprägniermitteldrucks in der Imprägnier- und Gelierphase des Imprägniermittels eine äusserst wirkungsvolle Absorption von verbleibenden Restgasen im Imprägniermittel und damit eine besonders homogene Isolation des Leiterstabs erreicht. Ein sonst üblicher druck- und vakuumfester Imprägnierkessel kann entfallen.

### KURZE BESCHREIBUNG DER ZEICHNUNGEN

In den Zeichnungen sind Ausführungsbeispiele der Erfindung vereinfacht dargestellt, und zwar zeigt:
- Fig.1: eine seitlich geführte Aufsicht auf ein in Stabrichtung geschnittenes erstes Ausführungsbeispiel einer einen Leiterstab aufnehmenden Form einer Vorrichtung zur Durchführung des erfindungsgemässen Verfahrens,
- Fig.2: eine Aufsicht auf die Form gemäss Fig.1 vor Ausführung des Schnitts,
- Fig.3: eine Aufsicht in Pfeilrichtung auf einen längs III-III geführten Schnitt durch die nun vergrössert dargestellte Form gemäss Fig.2,
- Fig.4: eine Aufsicht entsprechend Fig.3 auf ein zweites Ausführungsbeispiel der in Fig.1 genannten Form,
- Fig.5: in vergrösserter Darstellung einen Ausschnitt aus der Form gemäss Fig.3 beim Evakuieren des Leiterstabs,
- Fig.6: eine quer zum Leiterstab geführte Ansicht eines Teils der Form gemäss Fig.5,
- Fig.7: in vergrösserter Darstellung einen Ausschnitt aus der Form gemäss Fig.3 beim Anlegen von Druck an den imprägnierten Leiterstab bzw. beim Aushärten des Imprägniermittels, und
- Fig.8: eine quer zum Leiterstab geführte Ansicht eines Abschnitts der Form gemäss Fig.7.

### WEGE ZUR AUSFÜHRUNG DER ERFINDUNG

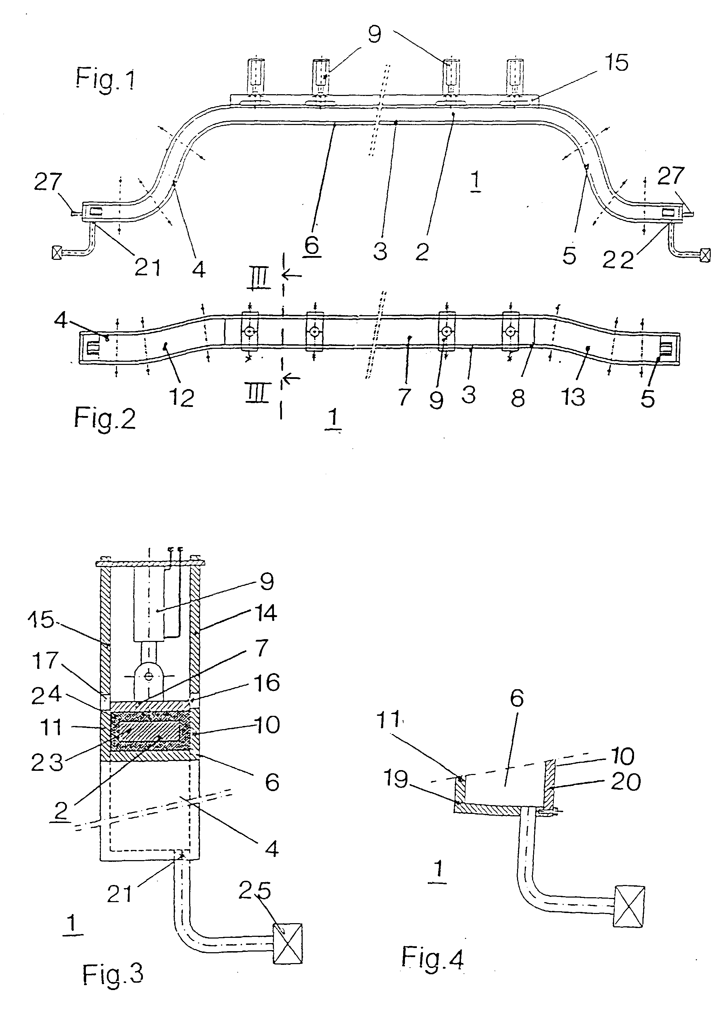

In allen Figuren bezeichnen gleiche Bezugszeichen auch gleichwirkende Teile. In den Figuren 1 bis 3 und 4 bis 8 ist ein erstes Ausführungsbeispiel einer in einer Vorrichtung zur Durchführung des erfindungsgemässen Verfahrens eingesetzten flüssigkeits- und druckfesten Form 1 dargestellt. Diese Form ist in einem Vakuumkessel angeordnet und ist entsprechend den Abmessungen eines Leiterstabs 2 gestaltet, d. h. sie besitzt einen ein gerade ausgebildetes Mittelteil des Leiterstabs 2 aufnehmenden Mittelabschnitt 3 sowie zwei sich daran anschliessende, gekrümmt ausgebildete Endabschnitte 4 und 5.

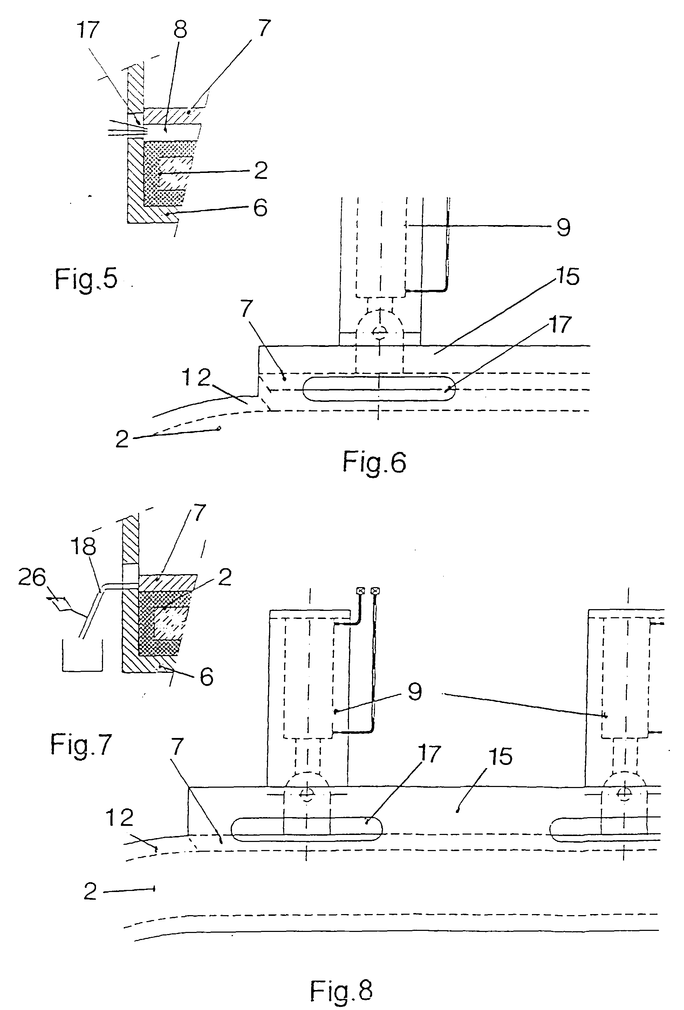

Aus Figuren 3, 5 und 7 ist zu erkennen, dass die Form 1 eine zur Aufnahme des Leitungsstabs 2 und des Imprägniermittels vorgesehene Unterform 6 von trogförmigem Profil und einen die gefüllte Unterform abschliessenden, balkenförmigen Deckel 7 aufweist. Der Deckel 7 ist nach Art des Kolbens einer hydraulischen Kolben-Zylinder-Vorrichtung in einer Öffnung 8 der Unterform 6 unter Bildung von hydraulischem Druck verschiebbar angeordnet (Fig.5). Die Öffnung 8 ist entlang dem Mittelabschnitt 3 der Unterform 6 angeordnet (Fig.2). Am Deckel 7 greifen in Längsrichtung des Leiterstabs 2 verteilte hydraulisch und/oder pneumatisch und/oder mechanisch wirkende Pressvorrichtungen 9 an. Bei geschlossener Form 1 (Figuren 3 und 7) ist der Deckel 7 zwischen zwei in Längsrichtung des Leiterstabs verlaufenden Seitenwänden 10, 11 der Unterform 6 geführt (Fig.3). Auf der Unterform - etwa durch Schraubverbindungen - flüssigkeits- und druckdicht befestigbare Deckteile 12, 13 begrenzen die Schmalseiten der Öffnung 8 (Fig.2). Die miteinander zusammenwirkenden Schmalseiten der Öffnung 8 und des Deckels 7 sind - wie aus den Figuren 6 und 8 zu ersehen ist - gegenläufig keilförmig angeschrägt. Hierdurch werden eine gute Führung des Deckels 7 beim Schliessen der Form 1 und eine verbesserte Dichtung der geschlossenen Form erreicht.

Die beiden Seitenwände 10 und 11 weisen jeweils einen über die geschlossene Form 1 hinaus vertikal nach oben geführten Wandaufsatz 14 bzw. 15 auf, in dem in Stabrichtung geführte und vorzugsweise als Langloch ausgebildete Öffnungen 16 bzw. 17 vorgesehen sind. Diese Öffnungen 16 bzw. 17 sind mit ihrem unteren Rand bei geschlossener Form 1 oberhalb (Fig.8) und bei geöffneter Form 1 (Fig.6) unterhalb der Unterkante des Deckels 7 positioniert. In Fig.7 ist symbolisch dargestellt, dass der untere Rand einer der Öffnungen 16 (und entsprechend auch der untere Rand jeder der weiteren Öffnungen 16 und 17) als Überlauf 18 für das Imprägniermittel ausgebildet ist.

Aus den Figuren 1 bis 3 kann entnommen werden, dass an den zuunterst positionierten Teilen der Unterform 6, d. h. an den Endabschnitte 4 und 5, Eintrittsöffnungen 21 und 22 für das Imprägniermittel vorgesehen sind. Die Unterform 6 ist im Bereich der Eintrittsöffnungen kühlbar ausgebildet. Ferner weist die Unterform 6 eine nicht dargestellte, in Längsrichtung des Leiterstabs 1 in Sektionen unterteilte Heizung auf, deren im Mittelabschnitt 3 der Form 1 gelegenen Sektionen stärker heizbar sind als die an den anschliessenden Endabschnitten 4, 5 gelegenen Sektionen.

Die Unterform kann entsprechend dem Ausführungsbeispiel gemäss den Figuren 1 bis 3 und 4 bis 8 einstückig ausgebildet sein und quer zur Stabachse trogförmiges Profil aufweisen. Entsprechend dem Ausführungsbeispiel gemäss Fig.4 kann die Form aber auch teilbar ausgebildet sein. Das trogförmige Profil wird dann aus einem den Boden und die Seitenwand 11 bildenden L-Profil 19 und einem die Seitenwand 10 bildenden und vakuum- und druckfest am L-Profil befestigbaren I-Profil 20 erreicht.

Der Leiterstab 1 kann wie folgt hergestellt werden:
Zunächst wird der nach Art eines Roebelstabes aus Teilleitern 23 (Fig.3) aufgebaute und noch keine Hauptisolation 24 (Fig.3) aufweisende Leiterstab 1 mit vorzugsweise Glimmer enthaltendem Isolierband bewickelt. Der bewickelte und mit einer Trennfolie allseits abgedeckte Leiterstab 1 wird in die vorzugsweise aus Stahl bestehende Form 1 eingelegt. Die beiden Deckteile 12, 13 werden unter Bildung der Öffnung 8 flüssigkeits- und druckfest mit den Endabschnitten 4 und 5 der Unterform 6 verschraubt, während der Deckel 7 unter Freigabe der Öffnung 8 zwischen den Wandaufsätzen 14, 15 geführt ist. Die infolge des nach oben geführten Deckels noch geöffnete Form 1 wird in den nicht dargestellten Vakuumkessel geführt, durch die nicht dargestellte Heizung und/oder durch den gegebenenfalls heizbar ausgebildeten Vakuumkessel vorgewärmt, nachfolgend gegebenenfalls gekühlt und durch Anlegen von Vakuum an den Kessel evakuiert. Durch den geöffneten Deckel 7 ist sichergestellt, dass im Leiterstab 2 und in der Form 1 befindliche Feuchtigkeit und Restgase schnell und gründlich über die grosse Öffnung 8 und die Öffnungen 16 und 17 aus der Form entfernt werden.

Nach einer vorbestimmten kurzen Zeitspanne sind Feuchtigkeit und Restgasgehalt unter vorgegebene Grenzwerte gefallen. An den Eintrittsöffnungen 21 und 22 wird nun Imprägniermittel, vorzugsweise ein Zweikomponenten-Tränkharz etwa auf der Basis eines Epoxids, in die evakuierte Form eingegeben. Das Imprägniermittel ist unter Druck in einem druckfesten Behälter 25 (Fig.3) gelagert. Da die Eintrittsöffnungen 21 und 22 an den zuunterst gelegenen Teilen der Form 1 angebracht sind, steigt das Imprägniermittel in der Form 1 von unten nach oben auf und verdrängt hierbei noch gegebenenfalls vorhandene Feuchtigkeitsund Gasreste nach oben, wo sie über die Öffnung 8 und die Öffnungen 16 und 17 abgesaugt werden. Hierbei ist es notwendig, dass die Unterkante des Deckels 7 oberhalb der Unterkante der Öffnungen 16 und 17 liegt (Figuren 5 und 6).

Das Niveau des in die Form 1 geführten Imprägniermittels wird mit einem am Überlauf 18 angebrachten Niveausensor 26 überwacht. Beginnt das Imprägniermittel am Überlauf aus der Form 1 zu fliessen, so gibt der Niveausensor 26 ein Steuersignal an die Pressvorrichtungen 9 ab. Der balkenförmige Deckel 7 wird nun durch die Pressvorrichtungen 9 nach unten in die Öffnung 8 hineinbewegt und so lange nach unten geführt bis die Öffnung 8 imprägniermitteldicht verschlossen und die in den Figuren 3, 7 und 8 dargestellte Position erreicht ist. Da der Deckel nach Art des Kolbens einer Kolben-Zylinder-Vorrichtung in der Öffnung 8 geführt ist, wird nun in der Form 1 hydraulischer Druck aufgebaut. Da der untere Rand jeder der Öffnungen 16, 17 jeweils oberhalb der Unterkante des balkenförmigen Deckels 7 positioniert ist, wird das Austreten von Imprägniermittel aus der Form 1 nun weitgehend unterbunden. Möglicherweise austretende Leckmengen werden über den Überlauf 18 abgeführt und aufgefangen (Fig.7).

Der imprägnierte Leiterstab 1 wird durch das mit dem unter Druck stehenden Behälter 25 kommunizierende Imprägniermittel unter Druck gesetzt und gegebenenfalls noch verbliebene Restgaseinschlüsse durch das entgaste und unter Druck gesetzte Imprägniermittel absorbiert und dadurch auf ein dielektrisch unschädliches Minimum reduziert.

Beim Imprägnieren kann mit Hilfe von elektrischen Messungen an einem aus der Form 1 herausgeführten Teilleiter 27 (Fig.1) oder an Stromdurchführungen der Form 1 festgestellt werden, ob der Leiterstab 2 schon ausreichend imprägniert ist. Der unter dem Druck des Imprägniermittels stehende Leiterstab 1 wird nun unter Beibehaltung des Imprägniermitteldrucks ausgehärtet. Zum Aushärten wird der Mittelabschnitt der Form 1 stärker geheizt als die gekrümmt ausgebildeten Endabschnitte 4 und 5. Das Imprägniermittel geliert und polymerisiert so in den Endabschnitten 4 und 5 später als im Mittelabschnitt 3. Noch notwendiges Imprägniermittel kann daher während der Gelierphase über die Eintrittsöffnungen 21 und 22 dauernd in die Form 1 geführt werden. Für das Nachführen von Imprägniermittel ist es von besonderem Vorteil, wenn die Form 1 im Bereich der Eintrittsöffnungen 21 und 22 während des Gelierens des Imprägniermittels gekühlt wird.

Das für die Herstellung eines Leiterstab erforderliche Volumen an Imprägniermittel wird so äusserst gering gehalten. Daher benötigt das Verfahren wenig Energie zum Erwärmen des Imprägniermittels. Zudem wird das Imprägniermittel wegen der rasch ausgeführten Verfahrensschritte schnell erneuert und wird das Imprägniermittel zugleich thermisch nur wenig belastet. Ein beim Stand der Technik vorgesehener Druck- und Vakuumkessel braucht daher allenfalls als Vakuumkessel ausgebildet zu sein. Da im Unterschied zum Stand der Technik kein Druckgas verwendet wird, kann nun auch kein druckbildendes Gas in die Form 1 gelangen. Da der die Form 1 aufnehmende Vakuumkessel während der Durchführung des Verfahrens unter Vakuum zumindest aber unter Unterdruck steht, treten Emissionen nicht nach aussen und können so Abluftreinigungsanlagen eingespart werden.

Durch die beheizbar ausgebildete Form kann eine Heizung des Vakuumkessels entfallen und viel Energie eingespart werden. Durch vakuum- und druckfeste Ausbildung der Form wird der Vakuumkessel entbehrlich, wodurch der Einsatz einer besonders klein dimensionierten Vakuumanlage begünstigt wird.

Der Leiterstab kann in seiner gesamten Länge in der Form 1 angeordnet sein, kann aber mit seinem isolationsfreien, für die Verschaltung in der Wicklung verwendeten Ende aus der Form heraugeführt sein.

### Bezugszeichnungsliste

- 1: Form
- 2: Leiterstab
- 3: Mittelabschnitt
- 4, 5: Endabschnitte
- 6: Unterform
- 7: Deckel
- 8: Öffnung
- 9: Pressvorrichtungen
- 10, 11: Seitenwände
- 12, 13: Deckteile
- 14, 15: Wandaufsätze
- 16, 17: Öffnungen
- 18: Überlauf
- 19: L-Profil
- 20: I-Profil
- 21, 22: Eintrittsöffnungen
- 23: Teilleiter
- 24: Hauptisolation
- 25: Behälter
- 26: Niveausensor
- 27: Teilleiter

## Patentansprüche

1. Verfahren zur Herstellung eines vorzugsweise als Roebelstab ausgebildeten Leiterstabs (2) der Wicklung einer elektrischen Maschine durch Bewickeln des unbewickelten Leiterstabs (23) mit Isolierband (24), durch Einlegen des bewickelten Leiterstabs (2) in eine druckfeste oder druck- und Vakuumfeste Form (1); durch Trocknen, Entgasen und Imprägnieren des bewickelten Leiterstabs in der Form und durch Härten des imprägnierten Leiterstabs in der Form, dadurch gekennzeichnet, dass der bewickelte Leiterstab bei zumindest teilweise geöffneter Form evakuiert, getrocknet und imprägniert wird, und dass nach dem Füllen der Form (1) mit Imprägniermittel die Form geschlossen und der bewickelte Leiterstab durch das Imprägniermittel unter Druck gesetzt und unter Druck ausgehärtet wird.

2. Verfahren nach Anspruch 1, dadurch gekennzeichnet, dass das Imprägniermittel von unten nach oben in die Form (1) gefüllt wird.

3. Verfahren nach Anspruch 1 oder 2, dadurch gekennzeichnet, dass die Form (1) beheizt wird.

4. Verfahren nach Anspruch 3, dadurch gekennzeichnet, dass die Form (1) beim Aushärten in einem ein gerade ausgebildetes Teil des Leiterstabs (2) aufnehmenden Mittelabschnitt (3) früher und/oder stärker beheizt wird als in den gekrümmt ausgebildeten Endabschnitten (4, 5).

5. Verfahren nach einem der Ansprüche 1 bis 4, dadurch gekennzeichnet, dass die Form (1) während des Gelierens des Imprägniermittels beim Aushärten im Bereich einer Zuführung für das Imprägniermittel gekühlt wird.

6. Verfahren nach einem der Ansprüche 1 bis 5, dadurch gekennzeichnet, dass die Form (1) in einem evakuierbaren Behälter angeordnet wird.

7. Vorrichtung zur Durchführung des Verfahrens nach Anspruch 1, die eine entsprechend den Abmessungen eines Leiterstabs (2) gestaltete druckfeste oder druck- und vakuumfeste Form (1) umfasst dadurch gekennzeichnet, dass die Form (1) eine zur Aufnahme des Leitungsstabs (2) und des Imprägniermittels vorgesehene Unterform (6) und einen die gefüllte Unterform (6) unter Bildung von hydraulischem Druck abschliessbaren Deckel (7) aufweist.

8. Vorrichtung nach Anspruch 7, dadurch gekennzeichnet, dass der Deckel (7) nach Art des Kolbens einer hydraulischen Kolben-Zylinder-Vorrichtung in einer Öffnung (8) der Form (1) unter Bildung des hydraulischen Drucks verschiebbar angeordnet.

9. Vorrichtung nach Anspruch 8, dadurch gekennzeichnet, dass die Öffnung (8) in einem ein gerade ausgebildetes Teil des Leiterstabs (2) aufnehmenden Mittelabschnitt (3) der Form (1) vorgesehen ist.

10. Vorrichtung nach Anspruch 9, dadurch gekennzeichnet, dass am Deckel (7) in Längsrichtung des Leiterstabs (2) verteilt hydraulisch und/oder pneumatisch und/oder mechanisch wirkende Pressvorrichtungen (9) angeordnet sind.

11. Vorrichtung nach Anspruch 10, dadurch gekennzeichnet, dass der Deckel (7) zwischen zwei in Längsrichtung des Leiterstabs (2) verlaufenden Seitenwänden (10, 11) der Unterform (6) geführt ist.

12. Vorrichtung nach Anspruch 11, dadurch gekennzeichnet, dass die beiden Seitenwände (10, 11) jeweils einen über die geschlossene Form (1) hinaus vertikal nach oben geführten Wandaufsatz (14, 15) aufweisen.

13. Vorrichtung nach Anspruch 12, dadurch gekennzeichnet, dass der Wandaufsatz (14, 15) mindestens eine Öffnung (16, 17) aufweist, welche mit ihrem unteren Rand bei geschlossener Form (1) oberhalb und bei geöffneter Form (1) unterhalb der Unterkante des Deckels (7) positioniert ist.

14. Vorrichtung nach Anspruch 13, dadurch gekennzeichnet, dass der untere Rand der Öffnung (16, 17) als Überlauf (18) für das Imprägniermittel ausgebildet ist.

15. Vorrichtung nach einem der Ansprüche 7 bis 14, dadurch gekennzeichnet, dass an den zuunterst positionierten Teilen der Unterform (6) Eintrittsöffnungen (21, 22) für das Imprägniermittel vorgesehen sind.

16. Vorrichtung nach Anspruch 15, dadurch gekennzeichnet, dass die Unterform (6) im Bereich der Eintrittsöffnungen (21, 22) kühlbar ausgebildet ist.

17. Vorrichtung nach einem der Ansprüche 9 bis 16, dadurch gekennzeichnet, dass die Form (6) heizbar ausgebildet ist.

18. Vorrichtung nach Anspruch 17, dadurch gekennzeichnet, dass die Heizung in Längsrichtung des Leiterstabes in Sektionen unterteilt ist, von denen die im Mittelabschnitt (3) der Form gelegenen Sektionen früher und/oder stärker heizbar sind als die an den anschliessenden Endabschnitten (4, 5) gelegenen Sektionen.

19. Vorrichtung nach einem der Ansprüche 7 bis 18, dadurch gekennzeichnet, dass die Unterform (6) in Richtung des Leiterstabes (2) teilbar ausgebildet ist.

20. Vorrichtung nach einem der Ansprüche 7 bis 19, dadurch gekennzeichnet, dass der Deckel (7) und mit dem Deckel beim Schliessen der Form (1) zusammenwirkende Deckteile (12, 13) keilförmige angeschrägte Schmalseiten aufweisen.

## Claims

1. Method for manufacturing a conductive bar (2), designed preferably in the form of a Roebel bar, of the winding of an electrical machine by wrapping the unwrapped conductive bar (23) with insulating tape (24), by placing the wrapped conductive bar (2) in a pressure-resistant or pressure-resistant and vacuum-resistant mould (1), by drying, degassing and impregnating the wrapped conductive bar in the mould and by curing the impregnated conductive bar in the mould, characterized in that the wrapped conductive bar is evacuated, dried and impregnated with the mould at least partly opened, and in that, after filling the mould (1) with impregnating agent, the mould is closed and the wrapped conductive bar is subjected to pressure by the impregnating agent and is cured under pressure.

2. Method according to Claim 1, characterized in that the impregnating agent is filled into the mould (1) from the bottom upwards.

3. Method according to Claim 1 or 2, characterized in that the mould (1) is heated.

4. Method according to Claim 3, characterized in that, during curing, the mould (1) is heated earlier and/or more intensely in a middle portion (3) receiving a part of the conductive bar (2) of a straight design than in the end portions (4, 5) of a curved design.

5. Method according to one of Claims 1 to 4, characterized in that, during the gelling of the impregnating agent during curing, the mould (1) is cooled in the region of a feed for the impregnating agent.

6. Method according to one of Claims 1 to 5, characterized in that the mould (1) is arranged in an evacuable container.

7. Apparatus for carrying out the method according to Claim 1, which comprises a pressure-resistant or pressure-resistant and vacuum-resistant mould (1) shaped according to the dimensions of a conductive bar (2), characterized in that the mould (1) has a lower mould (6), which is intended for receiving the conductive bar (2) and the impregnating agent, and a cover (7), which can close off the filled lower mould (6), with hydraulic pressure being formed.

8. Apparatus according to Claim 7, characterized in that the cover (7) is arranged displaceably in the manner of the piston of a hydraulic piston-cylinder device in an opening (8) of the mould (1), with the hydraulic pressure being formed.

9. Apparatus according to Claim 8, characterized in that the opening (8) is provided in a middle portion (3) of the mould (1) receiving a part of the conductive bar (2) of a straight design.

10. Apparatus according to Claim 9, characterized in that hydraulically and/or pneumatically and/or mechanically acting pressing devices (9) are arranged on the cover (7), distributed in the longitudinal direction of the conductive bar (2).

11. Apparatus according to Claim 10, characterized in that the cover (7) is disposed between two side walls (10, 11) of the lower mould (6), which run in the longitudinal direction of the conductive bar (2).

12. Apparatus according to Claim 11, characterized in that the two side walls (10, 11) each have a wall attachment (14, 15), which is disposed vertically upwards beyond the closed mould (1).

13. Apparatus according to Claim 12, characterized in that the wall attachment (14, 15) has at least one opening (16, 17), which is positioned with its lower rim above the lower edge of the cover (7) when the mould (1) is closed and below it when the mould (1) is open.

14. Apparatus according to Claim 13, characterized in that the lower rim of the opening (16, 17) is designed as an overflow (18) for the impregnating agent.

15. Apparatus according to one of Claims 7 to 14, characterized in that inlet openings (21, 22) for the impregnating agent are provided at the lowest-positioned parts of the lower mould (6).

16. Apparatus according to Claim 15, characterized in that, in the region of the inlet openings (21, 22), the lower mould (6) is designed such that it can be cooled.

17. Apparatus according to one of Claims 9 to 16, characterized in that the mould (6) [sic] is designed such that it can be heated.

18. Apparatus according to Claim 17, characterized in that the heating means is subdivided in the longitudinal direction of the conductive bar into sections, of which the sections that are situated in the middle portion (3) of the mould can be heated earlier and/or more intensely than the sections situated at the adjoining end portions (4, 5).

19. Apparatus according to one of Claims 7 to 18, characterized in that the lower mould (6) is designed such that it can be parted in the direction of the conductive bar (2).

20. Apparatus according to one of Claims 7 to 19, characterized in that the cover (7) and the top parts (12, 13) interacting with the cover during closing of the mould (1) have narrow sides bevelled in a wedge-shaped manner.

## Revendications

1. Procédé pour la fabrication d'une barre conductrice (2) de l'enroulement d'une machine électrique, réalisée de préférence sous la forme d'un barreau Roebel, par guipage de la barre conductrice non guipée (23) avec une bande isolante (24), par pose de la barre conductrice guipée (2) dans un moule (1) résistant à la pression ou résistant à la pression et au vide, par séchage, évacuation et imprégnation de la bande conductrice guipée dans le moule et par durcissement de la barre conductrice imprégnée dans le moule, caractérisé en ce que la barre conductrice guipée est évacué, séchée et imprégnée avec le moule au moins partiellement ouvert, et en ce qu'après le remplissage du moule (1) avec l'agent d'imprégnation, le moule est fermé et la barre conductrice guipée est mise sous pression par l'agent d'imprégnation et est durcie sous pression.

2. Procédé suivant la revendication 1, caractérisé en ce que l'agent d'imprégnation est introduit de bas en haut dans le moule (1).

3. Procédé suivant la revendication 1 ou 2, caractérisé en ce que le moule (1) est chauffé.

4. Procédé suivant la revendication 3, caractérisé en ce que le moule (1) est, lors du durcissement, chauffé plus tôt et/ou plus fortement dans un tronçon central (3) accueillant une partie rectiligne de la barre conductrice (2) que dans les tronçons d'extrémité incurvés (4, 5).

5. Procédé suivant l'une quelconque des revendications 1 à 4, caractérisé en ce que, pendant la gélification de l'agent d'imprégnation, le moule (1) est refroidi lors du durcissement dans la région d'une entrée de l'agent d'imprégnation.

6. Procédé suivant l'une quelconque des revendications 1 à 5, caractérisé en ce que le moule (1) est disposé dans un réservoir pouvant être mis sous vide.

7. Dispositif pour la mise en oeuvre du procédé suivant la revendication 1, qui comprend un moule (1) résistant à la pression ou résistant à la pression et au vide configuré conformément aux dimensions d'une barre conductrice (2), caractérisé en ce que le moule (1) présente un moule inférieur (6) prévu pour accueillir la barre conductrice (2) et l'agent d'imprégnation et un couvercle (7) pouvant fermer le moule inférieur (6) rempli en établissant une pression hydraulique.

8. Dispositif suivant la revendication 7, caractérisé en ce que le couvercle (7) est disposé de façon coulissante, à la manière du piston d'un dispositif hydraulique à piston-cylindre, dans une ouverture (8) du moule (1) en établissant la pression hydraulique.

9. Dispositif suivant la revendication 8, caractérisé en ce que l'ouverture (8) est prévue dans un tronçon central (3) du moule (1) accueillant une partie rectiligne de la barre conductrice (2).

10. Dispositif suivant la revendication 9, caractérisé en ce que des dispositifs de pression (9), répartis dans la direction longitudinale de la barre conductrice (2) et opérant par voie hydraulique et/ou pneumatique et/ou mécanique, sont disposés sur le couvercle (7) .

11. Dispositif suivant la revendication 10, caractérisé en ce que le couvercle (7) est guidé entre deux parois latérales (10, 11) du moule inférieur (6) orientées dans la direction longitudinale de la barre conductrice (2).

12. Dispositif suivant la revendication 11, caractérisé en ce que les deux parois latérales (10, 11) présentent chacune une rehausse de paroi (14, 15) menée verticalement vers le haut au-dessus du moule (1) fermé.

13. Dispositif suivant la revendication 12, caractérisé en ce que la rehausse de paroi (14, 15) présente au moins une ouverture (16, 17), qui est positionnée avec son bord inférieur au-dessus de l'arête inférieure du couvercle (7) lorsque le moule (1) est fermé et en dessous de cette arête lorsque le moule (1) est ouvert.

14. Dispositif suivant la revendication 13, caractérisé en ce que le bord inférieur de l'ouverture (16, 17) est configuré en trop-plein (18) pour l'agent d'imprégnation.

15. Dispositif suivant l'une quelconque des revendications 7 à 14, caractérisé en ce qu'il est prévu des ouvertures d'entrée (21, 22) pour l'agent d'imprégnation dans les parties les plus basses du moule inférieur (6).

16. Dispositif suivant la revendication 15, caractérisé en ce que le moule inférieur (6) peut être refroidi dans la région des ouvertures d'entrée (21, 22).

17. Dispositif suivant l'une quelconque des revendications 9 à 16, caractérisé en ce que le moule (6) peut être chauffé.

18. Dispositif suivant la revendication 17, caractérisé en ce que le chauffage est subdivisé en sections dans la direction longitudinale de la barre conductrice, dont les sections situées dans le tronçon central (3) du moule peuvent être chauffées plus tôt et/ou plus fortement que les sections situées dans les tronçons d'extrémité (4, 5) qui s'y raccordent.

19. Dispositif suivant l'une quelconque des revendications 7 à 18, caractérisé en ce que le moule inférieur (6) est séparable dans la direction de la barre conductrice (2).

20. Dispositif suivant l'une quelconque des revendications 7 à 19, caractérisé en ce que le couvercle (7) et des pièces de couverture (12, 13) coopérant avec le couvercle lors de la fermeture du moule (1) présentent des faces étroites chanfreinées en forme de coins.
